# EUROPÄISCHE PATENTANMELDUNG

(11) **EP 1 757 884 A2**
(43) Veröffentlichungstag der Anmeldung: **28.02.2007**
(21) Anmeldenummer: 06016043.9
(22) Anmeldetag: 01.08.2006
(51) Int. Cl.: F25J 3/04

(54) **Verfahren zur Gewinnung von Krypton und/oder Xenon durch Tieftemperaturzerlegung von Luft**

(30) Priorität: 26.08.2005 DE 102005040508
(71) Anmelder: Linde Aktiengesellschaft, 65189 Wiesbaden (DE)
(72) Erfinder: Wanner, Alfred, 82041 Deisenhofen (DE)
(74) Vertreter: Imhof, Dietmar

(57) **Zusammenfassung**

Das Verfahren dient zur Gewinnung von Krypton und/oder Xenon durch Tieftemperaturzerlegung von Luft. Verdichtete und gereinigte Einsatzluft (1, 1A, 1 B, 29) wird in ein Rektifiziersystem zur Stickstoff-Sauerstoff-Trennung eingeleitet, das eine Hochdrucksäule (2) und eine Niederdrucksäule (3) aufweist. Der Niederdrucksäule (3) wird an einer ersten Stelle eine sauerstoffreiche Flüssigkeit (42) entnommen. Mindestens ein erster Teil (43) der sauerstoffreichen Flüssigkeit (42) wird der Niederdrucksäule an einer zweiten Stelle wieder zugeführt, wobei zwischen der ersten und zweiten Stelle der Niederdrucksäule ein Stoffaustauschabschnitt (44) angeordnet ist. Von einer dritten Stelle der Niederdrucksäule (3), die auf Höhe der zweiten Stelle oder darunter angeordnet ist, wird eine weitere Flüssigkeit (35) abgezogen, in den Verdampfungsraum eines ersten Kondensator-Verdampfers (4) eingeleitet und dort partiell verdampft. Eine krypton- und xenonhaltige Fraktion (138) wird aus dem Verdampfungsraum eines ersten Kondensator-Verdampfers abgezogen und in den Verdampfungsraum eines zweiten Kondensator-Verdampfers (27) eingeleitet. Aus dem zweiten Kondensator-Verdampfer (27) wird ein Krypton-Xenon-Konzentrat (125) abgezogen.

## Beschreibung

Die Erfindung betrifft ein Verfahren gemäß dem Oberbegriff des Patentanspruchs 1, das zur Gewinnung von Krypton und/oder Xenon durch Tieftemperaturzerlegung von Luft dient.

Die Grundlagen der Tieftemperaturzerlegung von Luft im Allgemeinen sowie der Aufbau von Rektifiziersystemen zur Stickstoff-Sauerstoff-Trennung im Speziellen sind in der Monografie "Tieftemperaturtechnik" von Hausen/Linde (2. Auflage, 1985) und in einem Aufsatz von Latimer in Chemical Engineering Progress (Vol. 63, No.2, 1967, Seite 35) beschrieben. Die Hochdrucksäule wird unter einem höheren Druck als die Niederdrucksäule betrieben; die beiden Säulen stehen vorzugsweise in Wärmeaustauschbeziehung zueinander, beispielsweise über einen Hauptkondensator, in dem Kopfgas der Hochdrucksäule gegen verdampfende Sumpfflüssigkeit der Niederdrucksäule verflüssigt wird. Das Rektifiziersystem der Erfindung kann als klassisches Doppelsäulensystem ausgebildet sein, aber auch als Drei- oder Mehrsäulensystem. Zusätzlich zu den Kolonnen zur Stickstoff-Sauerstoff-Trennung können weitere Vorrichtungen zur Gewinnung anderer Luftkomponenten, insbesondere von Edelgasen aufweisen, beispielsweise eine Argongewinnung.

Das erzeugte Krypton-Xenon-Konzentrat kann an Ort und Stelle in weiteren Verfahrensschritten zu reinem Krypton und/oder Xenon getrennt werden. Alternativ wird es gespeichert, zum Beispiel in einem Flüssigtank, und an einem anderen Ort weiterverarbeitet.

Ein Verfahren der eingangs genannten Art ist in US 5313802 beschrieben.

Der Erfindung liegt die Aufgabe zugrunde, ein derartiges Verfahren besonders wirtschaftlich durchzuführen.

Diese Aufgabe wird durch die Merkmale des Anspruchs 1 gelöst.

Erfindungsgemäß wird die krypton- und xenonhaltige Fraktion aus dem Verdampfungsraum des ersten Kondensator-Verdampfers in den Verdampfungsraum eines zweiten Kondensator-Verdampfers eingeleitet und dort partiell verdampft; der flüssig verbleibende Anteil wird aus dem zweiten Kondensator-Verdampfer als Krypton-Xenon-Konzentrat abgezogen.

Auf diese Weise wird eine eigene Roh-Krypton-Xenon-Säule nicht unbedingt benötigt. Im Zusammenwirken des zweiten Kondensator-Verdampfers und des Stoffaustauschabschnitts zwischen der ersten und zweiten Stelle der Niederdrucksäule kann dennoch Methan aus dem unteren Bereich der Niederdrucksäule entweichen und findet sich nicht in unerwünscht hoher Konzentration in dem Krypton-Xenon-Konzentrat wieder.

Der "Stoffaustauschabschnitt" kann durch Böden, Füllkörper und/oder geordnete Packung gebildet werden. Er weist beispielsweise einen Umfang von 1 bis 10, vorzugsweise 2 bis 6 theoretischen beziehungsweise praktischen Böden. (Für den Fall, dass in dem betreffenden Abschnitt ausschließlich praktische Böden als Stoffaustauschelemente verwendet werden, gelten die Angaben in praktischen Bodenzahlen; falls Packung, Füllkörper oder Kombinationen verschiedener Typen von Stoffaustauschelementen eingesetzt werden, sind die Angaben in theoretischen Bodenzahlen anzuwenden.)

Der zweite Kondensator-Verdampfer ist vorzugsweise als Nebenkondensator außerhalb der Niederdrucksäule angeordnet und als Badverdampfer ausgebildet.

Der erste Kondensator-Verdampfer kann innerhalb oder außerhalb der Niederdrucksäule angeordnet sein. Der Stoffaustauschabschnitt zwischen erster und zweiter Stelle der Niederdrucksäule kann in demselben Behälter wie die übrigen Abschnitte der Niederdrucksäule oder in einem separaten Behälter angeordnet sein.

Der zweite Kondensator-Verdampfer wird beheizt, indem vorzugsweise ein kondensierendes Gas durch seinen Verflüssigungsraum geleitet wird. Dabei kann es sich beispielsweise um ein Gas handeln, das etwa unter dem Betriebsdruck der Hochdrucksäule steht, insbesondere um einen Teilstrom der Einsatzluft.

Das in dem Stoffaustauschabschnitt zwischen zweiter und erster Stelle der Niederdrucksäule aufsteigende Methan verlässt vorzugsweise mit einem Sauerstoffproduktstrom die Niederdrucksäule. Dieser kann entweder flüssig abgezogen werden, zum Beispiel als zweiter Teil der sauerstoffreichen Flüssigkeit von der ersten Stelle der Niederdrucksäule oder als Gasstrom von derselben Stelle oder einer höher gelegenen Stelle der Niederdrucksäule.

Grundsätzlich kann der erste Kondensator-Verdampfer, der üblicherweise den Hauptkondensator des Zweisäulensystems darstellt, in jeder bekannten Form ausgeführt werden, beispielsweise als Fallfilmverdampfer. Bei der Erfindung ist es jedoch günstiger, ihn als Badverdampfer zu realisieren, weil dadurch bereits dort eine relativ hohe Anreicherung an Krypton und Xenon auf sichere Weise erzielt werden kann.

Zusätzlich oder alternativ zu der Flüssigkeit aus dem Verdampfungsraum des ersten Kondensator-Verdampfers kann ein weiterer krypton- und xenonhaltiger Strom aus der Hochdrucksäule abgezogen und in den Verdampfungsraum des zweiten Kondensator-Verdampfers eingeleitet werden.

Auf diese Weise gelangt ein großer Anteil des in der Einsatzluft enthaltenen Kryptons und Xenons direkt in den zweiten Kondensator-Verdampfer, ohne zunächst die Niederdrucksäule zu durchströmen. Damit geht weniger Krypton und Xenon mit den Produkten der Niederdrucksäule verloren. Auch andere schwerer als Sauerstoff flüchtige Stoffe wie Kohlenwasserstoff oder N₂O gelangen nicht zum Sumpf der Niederdrucksäule und zum ersten Kondensator-Verdampfer.

Es ist günstig, wenn der weitere krypton- und xenonhaltige Strom stromaufwärts seiner Einleitung in den Verdampfungsraum des zweiten Kondensator-Verdampfers durch eine Reinigungsstufe geleitet wird, die insbesondere als Strippsäule ausgebildet ist, auf deren Kopf der weitere krypton- und xenonhaltige Strom flüssig aufgegeben wird. Eine derartige zusätzliche Säule ist in DE 10332863 A1 im Einzelnen beschrieben.

Als aufsteigender Dampf der Strippsäule wird vorzugsweise mindestens ein Teil des Gases verwendet, das in dem Verdampfungsraum des zweiten Kondensator-Verdampfers gebildet wird.

Der weitere krypton- und xenonhaltige Strom kann stromaufwärts seiner Einleitung in den Verdampfungsraum des zweiten Kondensator-Verdampfers einer Reinigung beziehungsweise stromaufwärts der Reinigungsstufe in einem dritten Kondensator-Verdampfer, insbesondere dem Kopfkondensator einer Rohargonsäule, partiell verdampft werden. Der flüssig verbleibende Anteil wird dann der Reinigungsstufe beziehungsweise dem zweiten Kondensator-Verdampfers zugeleitet.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: ein erstes Ausführungsbeispiel eines erfindungsgemäßen Verfahrens ohne Argongewinnung und
- Figur 2: ein erstes Ausführungsbeispiel eines erfindungsgemäßen Verfahrens mit Argongewinnung.

Verdichtete und gereinigte Einsatzluft (1) wird zu einem ersten Teil 1A in ein Rektifiziersystem zur Stickstoff-Sauerstoff-Trennung eingeleitet, das eine Hochdrucksäule (2), eine Niederdrucksäule (3) und einen Hauptkondensator ("erster Kondensator-Verdampfer") 4 aufweist, der in dem Beispiel als Fallfilmverdampfer ausgebildet ist. Gasförmiger Stickstoff 5 vom Kopf der Hochdrucksäule wird zu einem ersten Teil 6 dem Kondensationsraum des Hauptkondensators 4 zugeleitet. Das dort gebildete Kondensat 7 wird zu einem ersten Teil 8 der Hochdrucksäule als Rücklauf aufgegeben. Ein zweiter Teil 9 wird über ein Drosselventil 10 in die Niederdrucksäule 3 an deren Kopf eingespeist. Ein weiterer Teil 11 des gasförmigen Stickstoffs 5 vom Kopf der Hochdrucksäule wird in einen nicht dargestellten Kreislauf geführt, dort verflüssigt und über Leitung 12 als zusätzlicher Rücklauf auf die Hochdrucksäule 2 aufgegeben.

Etwa 3 bis 5 theoretische beziehungsweise praktische Böden oberhalb des Sumpfs der Hochdrucksäule 2 wird eine sauerstoffangereicherte Flüssigkeit 40, die im Wesentlichen frei von schwererflüchtigen Komponenten ist, abgezogen und über ein Drosselventil 41 der Niederdrucksäule an einer Zwischenstelle zugeführt.

Von der Niederdrucksäule 3 wird gasförmiger Stickstoff 32 am Kopf als Produkt (GAN) oder Restgas abgezogen. Von einer ersten Stelle der Niederdrucksäule wird eine sauerstoffreiche Flüssigkeit 42 entnommen und zu einem ersten Teil 43 der Niederdrucksäule 3 an einer zweiten Stelle, die sich unterhalb eines Stoffaustauschabschnitts 44 befindet, wieder zugeführt. Die Bypassmenge 43 und damit das Rücklaufverhältnis im Stoffaustauschabschnitt 44 wird über ein Bypassventil 46 eingestellt.

Ein zweiter Teil 45 der sauerstoffreichen Flüssigkeit 42 wird einer Innenverdichtung (internal compression) unterzogen, indem er in einer Pumpe 47 auf den gewünschten Produktdruck gebracht und über Leitung 48 (LOX-IC) einem oder mehreren Wärmetauschern zugeführt wird, zum Beispiel dem Hauptwärmetauscher-System, in dem auch die Einsatzluft 1 abgekühlt wird. Dort wird er verdampft (beziehungsweise - bei überkritischem Produktdruck - pseudo-verdampft), auf etwa Umgebungstemperatur angewärmt und schließlich als gasförmiges Druckprodukt abgeführt.

Verdampfung und Anwärmung können beispielsweise in indirektem Wärmeaustausch mit einem Hochdruckluftstrom durchgeführt werden. Im Ausführungsbeispiel wird dazu jedoch der in den Leitungen 11 und 12 angedeutete Stickstoff-Kreislauf eingesetzt.

Unterhalb des Stoffaustauschabschnitts 44 wird eine weitere Flüssigkeit 35 abgezogen, mittels einer weiteren Pumpe 36 über Leitung 37 zum Verdampfungsraum des Hauptkondensators 4 gefördert und dort teilweise verdampft. Das dabei gebildete Dampf-Flüssigkeitsgemisch 38 fließt teilweise zum Sumpf der Niederdrucksäule 3 zurück. Ein anderer, flüssig verbliebener Anteil wird über Leitung 138 in den Verdampfungsraum eines zweiten Kondensator-Verdampfers, des Nebenkondensators 27 geleitet. Die nach der partiellen Verdampfung in dem Nebenkondensator flüssig verbleibende Fraktion wird als Krypton-Xenon-Konzentrat 125 aus dem Verdampfungsraum des Nebenkondensators 27 entnommen (Crude-Kr-Xe).

Der Nebenkondensator 27 kann mit jeder geeigneten Fraktion beheizt werden. In dem Ausführungsbeispiel wird ein Teil 1 B der kalten Einsatzluft 1 als Heizmittel verwendet. (Alternativ dazu könnte jede andere Fraktion aus der Hochdrucksäule, zum Beispiel Druckstickstoff vom Kopf der Hochdrucksäule 2 eingesetzt werden.) Die in dem Nebenkondensator 27 verflüssigte Luft 29 wird einige Böden oberhalb der gasförmigen Luft 1 in die Hochdrucksäule 2 eingeleitet.

Sauerstoffangereicherte Sumpfflüssigkeit 13 wird als " weiterer krypton- und xenonhaltiger Strom" der Hochdrucksäule 2 entnommen, in Ventil 14 entspannt und auf den Kopf einer Zusatzsäule ("Strippsäule") 120 aufgegeben, die als "Reinigungsstufe" bei etwa demselben Druck wie die Niederdrucksäule 3 betrieben wird. Der gereinigte weitere krypton- und xenonhaltige Strom 121 wird als zusätzlicher oder einziger Einsatz dem Verdampfungsraum des Nebenkondensators 27 zugeleitet.

In dem Verdampfungsraum des Nebenkondensators 27 gebildetes Gas 30 mindestens zum Teil 31 als aufsteigender Dampf in die Strippsäule 120 eingeleitet. Vom Kopf der Strippsäule 120 wird ein stickstoffhaltiges Gas 165 abgezogen und über Leitung 166 an geeigneter Stelle der Niederdrucksäule 3 zugeführt.

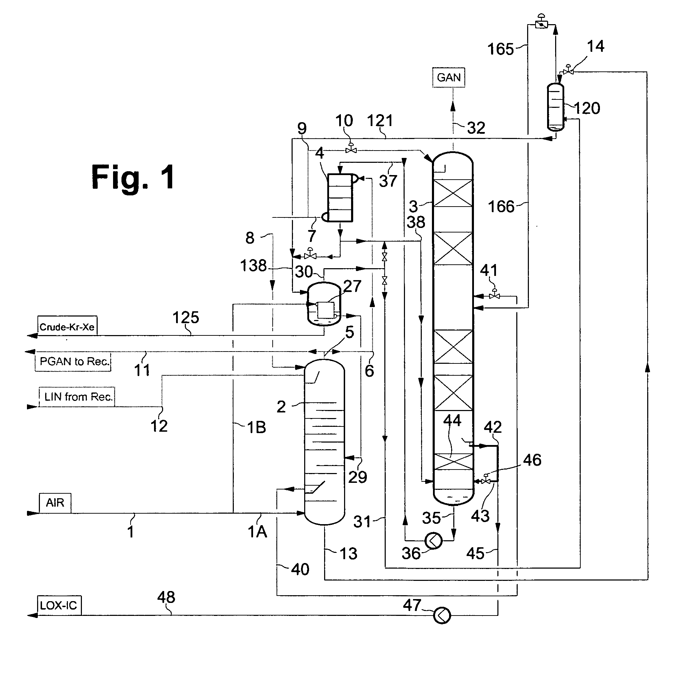

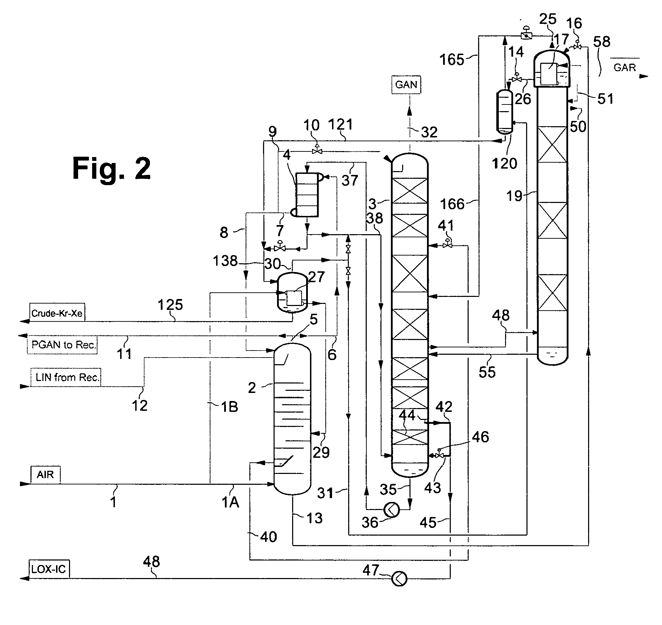

Das Ausführungsbeispiel der Figur 2 weist im Unterschied zu Figur 1 eine Argongewinnung auf.

Über eine Argonübergangs-Leitung 48 wird eine argonhaltige Fraktion aus der Niederdrucksäule 3 in eine Rohargonsäule 19 geleitet. Die argonhaltige Fraktion 48 wird der Rohargonsäule 19 ummittelbar über dem Sumpf gasförmig zugeleitet. Der aufsteigende Dampf reichert sich an Argon an.

Am Kopf der Rohargonsäule 19 wird argonangereicherter Dampf 50 erzeugt und in einem "dritten Kondensator-Verdampfer", dem Rohargonkondensator 17 zum großen Teil kondensiert. Die dabei erzeugte Flüssigkeit 51 wird als Rücklaufflüssigkeit auf die Rohargonsäule 19 aufgegeben. Sumpfflüssigkeit 55 der Rohargonsäule 19 strömt in die Niederdrucksäule 3 zurück.

Gasförmig verbliebenen Rohargon 58 aus dem Verflüssigungsraum des ersten Kondensator-Verdampfers 17 wird gegebenenfalls in einer Reinargonsäule weiter zerlegt und insbesondere von leichterflüchtigen Bestandteilen wie Stickstoff befreit (nicht dargestellt).

Die sauerstoffangereicherte Sumpfflüssigkeit 13 wird hier zunächst über ein Ventil 16 als Kühlmittel dem Verdampfungsraum des Rohargonkondensators 17 zugeleitet. Lediglich der flüssig verbliebene Anteil 26 wird auf die Strippsäule 120 aufgegeben. Der bei der partiellen Verdampfung im dritten Kondensator-Verdampfer 17 erzeugte Dampf 25 wird aus dem Verdampfungsraum des ersten Kondensator-Verdampfers 17 abgezogen und gemeinsam mit dem Kopfdampf der Strippsäule über Leitung 165 der Niederdrucksäule zugeführt.

## Patentansprüche

1. Verfahren zur Gewinnung von Krypton und/oder Xenon durch Tieftemperaturzerlegung von Luft, bei dem
- verdichtete und gereinigte Einsatzluft (1, 1A, 1 B, 29) in ein Rektifiziersystem zur Stickstoff-Sauerstoff-Trennung eingeleitet wird, das mindestens eine Hochdrucksäule (2) und eine Niederdrucksäule (3) aufweist, wobei
- der Niederdrucksäule (3) an einer ersten Stelle eine sauerstoffreiche Flüssigkeit (42) entnommen wird,
- mindestens ein erster Teil (43) der sauerstoffreichen Flüssigkeit (42) der Niederdrucksäule an einer zweiten Stelle wieder zugeführt wird, wobei zwischen der der erste und zweiten Stelle der Niederdrucksäule ein Stoffaustauschabschnitt (44) angeordnet ist,
- von einer dritten Stelle der Niederdrucksäule (3), die auf Höhe der zweiten Stelle oder darunter angeordnet ist, eine weitere Flüssigkeit (35) abgezogen, in den Verdampfungsraum eines ersten Kondensator-Verdampfers (4) eingeleitet und dort partiell verdampft wird und
- eine krypton- und xenonhaltige Fraktion (138) aus dem Verdampfungsraum eines ersten Kondensator-Verdampfers abgezogen wird,
**dadurch gekennzeichnet, dass**
- die krypton- und xenonhaltige Fraktion (138) in den Verdampfungsraum eines zweiten Kondensator-Verdampfers (27) eingeleitet und
- ein Krypton-Xenon-Konzentrat (125) aus dem zweiten Kondensator-Verdampfer (27) abgezogen wird.

2. Verfahren nach Anspruch 1, **dadurch gekennzeichnet, dass** der zweite Kondensator-Verdampfer (27) mit einem Gas (1 B) beheizt wird, das einen Druck aufweist, der etwa gleich dem Betriebsdruck der Hochdrucksäule ist.

3. Verfahren nach Anspruch 1 oder 2, **dadurch gekennzeichnet, dass** der zweite Kondensator-Verdampfer mit einem Teilstrom (1 B) der Einsatzluft (1) beheizt wird.

4. Verfahren einem der Ansprüche 1 bis 3, **dadurch gekennzeichnet, dass** ein zweiter Teil (45, 48) der sauerstoffreichen Flüssigkeit (42) von der ersten Stelle der Niederdrucksäule (3) und/oder eine andere Sauerstofffraktion von oberhalb der ersten Stelle der Niederdrucksäule als Produkt abgezogen wird.

5. Verfahren nach einem der Ansprüche 1 bis 3, **dadurch gekennzeichnet, dass** der erste Kondensator-Verdampfer (4) als Badverdampfer ausgebildet ist.

6. Verfahren nach einem der Ansprüche 1 bis 4, **dadurch gekennzeichnet, dass** ein weiterer krypton- und xenonhaltiger Strom (13) aus der Hochdrucksäule (3) abgezogen und in den Verdampfungsraum des zweiten Kondensator-Verdampfers (27) eingeleitet (121) wird.

7. Verfahren nach Anspruch 6, **dadurch gekennzeichnet, dass** der weitere krypton- und xenonhaltige Strom (13, 26) stromaufwärts seiner Einleitung in den Verdampfungsraum des zweiten Kondensator-Verdampfers (27) durch eine Reinigungsstufe geleitet wird.

8. Verfahren nach Anspruch 7, **dadurch gekennzeichnet, dass** die Reinigungsstufe als Strippsäule (120) ausgebildet ist.

9. Verfahren nach Anspruch 8, **dadurch gekennzeichnet, dass** in dem Verdampfungsraum des zweiten Kondensator-Verdampfers (27) gebildetes Gas (30, 31) mindestens zum Teil als aufsteigender Dampf in die Strippsäule (120) eingeleitet wird.

10. Verfahren nach einem der Ansprüche 6 bis 9, **dadurch gekennzeichnet, dass** der weitere krypton- und xenonhaltige Strom (13) stromaufwärts seiner Einleitung in den Verdampfungsraum des zweiten Kondensator-Verdampfers beziehungsweise stromaufwärts der Reinigungsstufe (120) in einem dritten Kondensator-Verdampfer (17), insbesondere dem Kopfkondensator einer Rohargonsäule (19), partiell verdampft wird.
